**Europäisches Patentamt**

**European Patent Office**

**Office européen des brevets**

(11) Numéro de publication : **0 322 268 B1**

(12) # FASCICULE DE BREVET EUROPEEN

(45) Date de publication du fascicule du brevet :
**07.09.94 Bulletin 94/36**

(51) Int. Cl.$^5$ : **G09B 3/04**, G09B 29/00

(21) Numéro de dépôt : **88403055.2**

(22) Date de dépôt : **02.12.88**

(54) **Procédé et dispositif de recueil d'informations et leurs applications.**

(30) Priorité : **02.12.87 FR 8716729**

(43) Date de publication de la demande :
**28.06.89 Bulletin 89/26**

(45) Mention de la délivrance du brevet :
**07.09.94 Bulletin 94/36**

(84) Etats contractants désignés :
**BE CH DE ES FR GB IT LI LU**

(56) Documents cités :
**DE-A- 1 923 169**
**US-A- 2 924 895**

(73) Titulaire : **Rebeillard, Serge Jean-Marie**
**32-34, Rue de Longchamp**
**F-75016 Paris (FR)**
Titulaire : **Kreweras, Cécile Denise**
**32, Rue de Longchamp**
**F-75016 Paris (FR)**

(72) Inventeur : **Rebeillard, Serge Jean-Marie**
**32-34, Rue de Longchamp**
**F-75016 Paris (FR)**
Inventeur : **Kreweras, Cécile Denise**
**32, Rue de Longchamp**
**F-75016 Paris (FR)**

(74) Mandataire : **Moncheny, Michel et al**
**c/o Cabinet Lavoix**
**2 Place d'Estienne d'Orves**
**F-75441 Paris Cedex 09 (FR)**

EP 0 322 268 B1

## Description

La présente invention concerne un procédé et un dispositif permettant de réaliser la collecte d'informations en vue de leur traitement ultérieur dans des domaines très divers d'aide à la décision, tels que études de marchés, politique commerciale dans les entreprises, communication, etc ...

A l'heure actuelle, les informations nécessaires peuvent être collectées au moyen de questionnaires distribués à groupe de personnes constituant un échantillon de la population à étudier. Ces questionnaires comportent un certain nombre de "questions" ou "propositions" auxquelles chaque personne de l'échantillon doit attribuer une note, par example de 1 à 4 ou de 1 à 5, ou une appréciation du type "un peu", "beaucoup", "jamais", "toujours", etc ...

En variante, les questions sont posées à la personne interrogée par un enquêteur.

Dans les deux cas, ce mode de collecte d'informations n'est pas satisfaisant car les propositions sont présentées de façon isolée, sans relation entre elles de sorte que la note qu'affecte la personne interrogée à chacune de ces propositions ne tient pas compte du contenu des autres propositions. La hiérarchie qui sera donc ensuite établie entre les diverses propositions ne pourra pas être significative puisqu'elle sera le résultat d'une moyenne de notes attribuées à des propositions isolées.

De plus, lorsque le questionnaire est présenté par un enquêteur, la personne interrogée ne peut pas faire abstraction dans ses réponses de la relation qui se crée avec la personne qui l'interroge. En d'autres termes, la présence de l'enquêteur perturbe d'une façon sensible la personne interrogée et peut l'amener à introduire de ce fait des décalages dans ses réponses.

Bien entendu, si la collecte d'informations est ainsi perturbée, la hiérarchie qui est ensuite établie entre les diverses propositions formulées auprès des personnes interrogées est également faussée et l'interprétation des résultats s'en trouve nécessairement altérée.

Pour tenter d'atténuer ce défaut, on est alors conduit à augmenter la taille de l'échantillon, ce qui alourdit les procédures et en augmente le coût.

Le document DE-A-1923169 décrit par ailleurs un dispositif permettant d'associer de façon mécanique des informations de deux types différents. Les informations d'un premier type, par exemple des questions, sont portées par des cartes, tandis que les informations d'un second type, par exemple les réponses à ces questions, sont portées par un support subdivisé en cases.

Le but de cette invention est de proposer un procédé et un dispositif de collecte d'informations qui permettent de remédier à ces inconvénients et notamment d'établir à partir des informations recueillies une hiérarchie correcte correspondant réellement au classement que peuvent en effectuer les personnes constituant l'échantillon. Ce procédé et ce dispositif doivent de plus permettre de réaliser une analogie aussi complète que possible entre le comportement de la personne qui classe les propositions et celui de cette même personne en situation réelle.

A cet effet, l'invention a pour objet un procédé de collecte d'informations auprès de personnes constituant un échantillon représentatif de population, caractérisé en ce qu'on établit après enquête une liste de questions ou propositions; on porte chaque proposition sur une carte distincte, on fournit à chacune des personnes de l'échantillon un même ensemble de cartes portant chacune l'une des propositions sur lesquelles ces personnes doivent se prononcer; on place chacune de ces personnes devant un support comportant un nombre déterminé de cases affectées de valeurs différentes; chacune des personnes constituant l'échantillon classe les diverses propositions les unes par rapport aux autres en disposant les cartes correspondantes sur les diverses cases du support; puis on affecte à chaque proposition une "note" ou un "coefficient" en fonction de sa position sur le support.

Selon d'autres caractéristiques :
- on utilise un ensemble de N1 cartes portant chacune une proposition ou information, et un support comportant un nombre N2 de cases auxquelles sont affectées des valeurs différentes;
- le nombre N2 de cases du support est supérieur au nombre N1 de cartes portant les propositions;
- de préférence le nombre N2 de cases est supérieur à deux fois le nombre N1 de cartes portant les propositions ;
- les cases sont disposées suivant une ligne ;
- les cases sont disposées suivant une grille à deux dimensions.

L'invention a également pour objet un procédé de traitement d'informations recueillies par le procédé précité, ce procédé étant caractérisé en ce qu'on affecte à chacune des propositions soumises aux personnes constituant l'échantillon un coefficient déterminé à partir de la position de la case sur laquelle se trouve la carte portant cette information, on effectue un classement de l'ensemble des propositions pour chacune des personnes de l'échantillon, on détermine pour chaque proposition ou pour un groupe de propositions la dispersion réelle des classements effectués par l'ensemble des personnes constituant l'échantillon, on détermine la dispersion théorique maximale pour un échantillon de même taille et l'on calcule la valeur d'une grandeur par la formule :

$$C = K \left(1 - \frac{\sigma}{\Sigma}\right)$$

où K est un coefficient qui est de préférence égal à 100.

L'invention va être décrite plus en détail ci-dessous, sous ses divers aspects, en se référant au dessin annexé sur lequel :

- la Fig. 1 représente un support délimitant des cases, ainsi que des cartes portant des propositions;
- les Fig. 2 et 3 représentent deux variantes relatives à la disposition des cases sur le support.

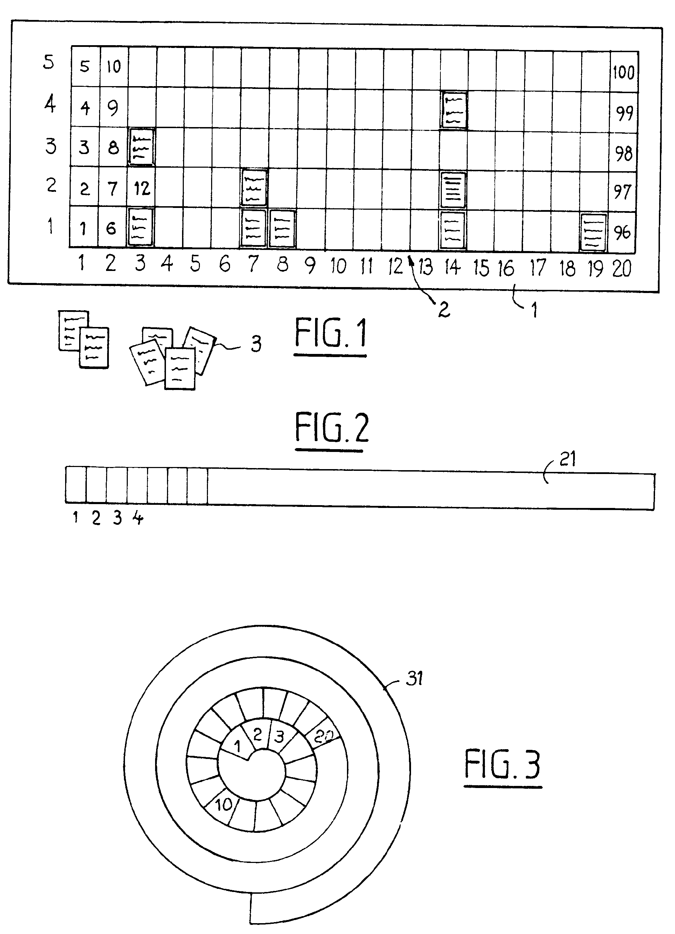

On a représenté sur la Fig. 1 un support 1 sur lequel est dessinée une grille 2 comportant par exemple vingt colonnes et cinq rangées. Pour la clarté de la présentation, les colonnes ont été numérotées de 1 à 20 et les rangées ont été numérotées de 1 à 5, mais cette numérotation n'est pas indispensable.

Le support peut, de façon commode, être constitué par un tapis analogue à un tapis de jeu. La grille peut être matérialisée par des séries de traits horizontaux et verticaux ou par des points représentant les cases ou de toute autre façon appropriée.

Sont également représentés au dessin des cartes 3, jetons ou analogues, constituant des supports sur lesquels figurent des informations ou des propositions qui ont été déterminées à la suite d'une enquête préalable. Ces supports sont suffisamment rigides pour pouvoir être manipulés.

De préférence, le nombre N2 de cases figurant sur le tapis est sensiblement supérieur au nombre N1 de cartes portant les propositions. A titre d'exemple, on peut utiliser de 30 à 40 cartes pour un tapis comportant, comme représenté, 100 cases.

Le dispositif constitué par le tapis et les cartes est utilisé de la façon suivante : après avoir sélectionné un certain nombre de personnes constituant un échantillon représentatif de la population visée, on fournit à chacune de ces personnes un "jeu" de cartes portant les diverses propositions à classer. Chacune de ces personnes est placée seule devant le "tapis" et doit disposer l'ensemble des cartes sur les cases figurant sur ce tapis. A cet effet, elles effectuent un premier classement le long de la rangée inférieure, les diverses propositions étant classées par ordre croissant dans les 20 cases de cette rangée inférieure.

Puis, dans un second temps, les cartes figurant sur une même case de la rangée inférieure sont classées par ordre croissant dans les diverses cases de la colonne correspondante.

Bien entendu, plusieurs propositions peuvent figurer dans une même rangée, dans une même colonne ou sur une même case, et des cases demeurent nécessairement libres.

Les avantages de ce type de collecte d'informations sont très importants :

- tout d'abord, le fait que toutes les informations ou propositions soient reportées sur des cartes, permet à la personne interrogée de les manipuler et d'en prendre connaissance, de les considérer en relation les unes par rapport aux autres avant de les classer.
- tout ou partie des cartes ayant été disposé sur le tapis, la personne interrogée peut vérifier que le classement effectué correspond effectivement à ce qu'elle souhaite et, le cas échéant, corriger la position de certaines cartes ;
- la personne interrogée est amenée à adopter une attitude active pour effectuer un classement entre les diverses propositions qui lui sont soumises;
- il en résulte une complète analogie entre le comportement de la personne qui effectue le classement des propositions et celui de cette même personne en situation réelle, que cette situation soit une situation d'achat, de vote, de formation d'une opinion, etc ...
- à partir de la grille représentée à la Fig. 1, une hiérarchie peut être établie entre les diverses propositions, en affectant à chacune d'elles un coefficient qui, à titre d'exemple non limitatif, peut être constitué par un nombre de 1 à 100 correspondant aux 100 cases de la grille. La hiérarchie ainsi obtenue est significative car, grâce au procédé selon l'invention, les diverses propositions ont été classées sans être présentées de façon isolée et, par conséquent, en situation de confrontation et de comparaison les unes par rapport aux autres ;
- La personne interrogée n'est ni gênée ni influencée par la présence d'un enquêteur, de sorte que le classement effectuée n'est pas perturbé et correspond bien à la réalité ;
- l'interprétation des résultats peut être effectuée en conservant la totalité de l'information observable, car elle n'utilise que les propositions dans leur formulation d'origine et leur classement, ce dernier résultant simplement du traitement informatique des différents classements recueillis auprès des éléments de l'échantillon.

Un traitement particulièrement intéressant des informations recueillies réside dans la détermination de la valeur d'un "indicateur de consensus" et qui est calculé de la façon suivante :

- on détermine à partir des classements effectués par l'ensemble des personnes constituant l'échantillon (la cible) la dispersion réelle (écart type) d'une proposition déterminée. Cette dispersion est désignée par le symbole $\sigma$ et est calculée suivant une méthode statistique classique ;
- on calcule la dispersion théorique (ou écart type) maximale $\Sigma$ pour un échantillon de même taille ;
- on détermine la valeur de l'indicateur de consensus C par une formule du type :

$$C = K \left( 1 - \frac{\sigma}{\Sigma} \right)$$

où K peut, par exemple, être égal à 100 ;
- si toutes les personnes consultées ont placé une même proposition à la même place sur le tapis, le consensus est maximum et égal à 100 ;
- si au contraire ces personnes ont placé une même proposition à des valeurs extrêmes de la grille, le consensus est minimum et égal à zéro.

La valeur de $\Sigma$ (écart type maximal) peut être calculée de deux façons différentes selon que l'on considère une distribution ayant le même nombre de personnes et la même valeur moyenne, ou une distribution indépendante de la moyenne constatée.

Dans le premier cas :

On désigne par N le nombre de personnes, N1 le nombre d'items et N2 le nombre de cases du tapis. Si, de plus on appelle X1, X2 ... XN, les notes des cases où chaque personne a placé un même item, la moyenne constatée est :

$$M = \frac{X1 + K2 + ... + XN}{N}$$

La somme des notes pour l'item considéré est

$$S = M \times N = X1 + X2 + ... + XN$$

On construit une distribution extrême Y1, Y2, ... YN de N valeurs telle que :

$$Y1 + Y2 + ... YN = S$$

Pour ce faire, on commence par donner la valeur 1 à tous les Y. Il reste alors S-N points à répartir. On complète alors à N2 le maximum de cas possibles. Ceci fait, le reste éventuel est ajouté à une des valeurs Y restée à la valeur 1. On calcule le sigma maximum qui est l'écart-type de cette distribution Y1, Y2 ..., YN.

Exemple : on a constaté pour 3 personnes et un item donné les cases suivantes : 40, 60 et 80. Ceci donne une somme S de 180. On pose d'abord les valeurs suivantes (dans l'exemple N2 est égal à 100) :

|  | Y1 | Y2 | Y3 | somme | reste |
|---|---|---|---|---|---|
|  | 1 | 1 | 1 | 3 | 180 - 3 = 177 |
| complément |  |  |  |  |  |
| à 100 : | 100 | 1 | 1 | 102 | 78 |
| affectation |  |  |  |  |  |
| du reste: | 100 | 79 | 1 | 180 | O |

La distribution 100, 79, 1 donne l'écart-type maximum "grand sigma".

Dans le second cas, on calcule "grand sigma" indépendamment de la somme et donc de la moyenne constatée :

On montre facilement que si on ne s'occupe pas de la moyenne constatée, la "pire" des distributions qui peut être faite sur le tapis consiste en ceci :
- la première personne pose le carton de l'item 1 sur la première case;
- la seconde personne le pose sur la dernire case;
- la troisième sur la première case, etc...
  tous les cartons étant répartis sur les deux cases extrêmes.

Dans ce cas, la distribution des Y s'écrira: 1, N2, 1, N2, 1, etc. Le cas le plus dispersé possible est équivalent à un nombre pair de notes, et en particulier à la distribution 1, N2. La moyenne est alors :

$$M = (1 + N2)/2$$

On calcule l'écart-type correspondant :

| valeur | écart | carré de l'écart |
|--------|-------|------------------|
| 1 | (1-N2)/2 | $\left[(1-N2)/2\right]^2$ |
| N2 | (N2-1)/2 | $\left[(1-N2)/2\right]^2$ |

Ce qui conduit à un écart-type de (N2-1)/2. Dans le cas d'un exemple avec N2 : 100, cet écart vaut 99/2, soit 49,5.

Le calcul de l'indicateur de consensus est de préférence effectué par un ordinateur dans lequel sont introduites les informations recueillies et qui comporte un programme adapté à ce calcul ainsi qu'à d'autres calculs statistiques, classiques, et que l'on ne décrira pas ici.

Cette notion originale de consensus est très intéressante car elle permet, notamment, de regrouper a posteriori en sous-cibles les personnes ayant donné les mêmes valeurs, par exemple à plus ou moins 10 %, à une même proposition ; elle permet également de repérer les propositions systématiquement discriminantes au sein d'un même échantillon ou d'une même cible.

La notion de consensus permet de dégager les "invariants" sur plusieurs populations. En deçà des facteurs les plus importants pour chacune des populations et qui sont généralement différents, il est etrêmement utile, notamment pour effectuer des études de marché, d'être en mesure d'indiquer ce qui reste stable lorsqu'on passe d'une population ou d'une cible à une autre.

Afin d'illustrer le fait que l'invention n'est pas limitée au mode de réalisation représenté à la Fig. 1, on a représenté aux Figs. 2 et 3 une disposition différente des cases sur un "tapis". Dans le cas de la Fig. 2, ces cases sont disposées suivant une seule rangée 21, de sorte que les cartes peuvent être classées d'une façon linéaire.

Dans le mode de réalisation de la Fig. 2, le mode de classement est également linéaire mais la ligne 31 selon laquelle sont disposées les cases a une forme de spirale.

Bien entendu, ces diverses dispositions ne sont données qu'à titre d'exemple et ne limitent en aucune façon l'objet de ce brevet.

On notera également, comme autres avantages du procédé et du dispositif selon l'invention, que l'efficacité du procédé de recueil ou de collecte d'informations permet de travailler sur des échantillons plus petits que les méthodes classiques, ces échantillons plus faibles demeurant cependant tout-à-fait représentatifs.

De plus et comme cela a déjà été indiqué, les valeurs ou les données recueillies se rapprochent beaucoup plus d'une situation réelle et sont donc beaucoup plus cohérents.

Le procédé et le dispositif selon l'invention peuvent trouver des applications dans de nombreux domaines parmi lesquels on citera : études de marchés, gestion et direction d'entreprises, recrutement, méthodes de tests, etc ...

## Revendications

1. Procédé de collecte d'informations auprès de personnes constituant un échantillon représentatif de population, caractérisé en ce qu'on établit après enquête une liste de questions ou propositions; on porte chaque proposition sur une carte distincte, on fournit à chacune des personnes de l'échantillon un même ensemble de cartes (3) portant chacune l'une des propositions sur lesquelles ces personnes doivent se prononcer; on place chacune de ces personnes devant un support (1) comportant un nombre déterminé de cases affectées de valeurs différentes; chacune des personnes constituant l'échantillon classe les diverses propositions les unes par rapport aux autres en disposant les cartes correspondantes sur les diverses cases du support; puis on affecte à chaque proposition une "note" ou un "coefficient" en fonction de sa position sur le support.

2. Procédé suivant la revendication 1, caractérisé en ce qu'on utilise un ensemble de N1 cartes (3) portant chacune une proposition ou information, et un support (1) comportant un nombre N2 de cases auxquelles sont affectées des valeurs différentes.

3. Procédé suivant la revendication 2, caractérisé en ce que le nombre N2 de cases du support est supérieur au nombre N1 de cartes portant des propositions.

4. Procédé suivant la revendication 2, caractérisé en ce que le nombre N2 de cases est supérieur à deux fois le nombre N1 de cartes portant les propositions.

5. Procédé suivant la revendication 1, caractérisé en ce que les cases sont disposées suivant une ligne.

6. Procédé suivant la revendication 1, caractérisé en ce que les cases sont disposées suivant une grille (2) à deux dimensions.

7. Procédé suivant la revendication 6, caractérisé en ce que la valeur des cases de la grille augmente dans chaque rangée, suivant une direction, et augmente dans chaque colonne suivant une direction.

8. Procédé de traitement d'informations recueillies par le procédé selon l'une quelconque des revendications 1 à 7, caractérisé en ce qu'on affecte à chacune des propositions soumises aux personnes constituant l'échantillon un coefficient déterminé à partir de la position de la case sur laquelle se trouve la carte portant cette information, on effectue un classement de l'ensemble des propositions pour chacune des personnes de l'échantillon, on détermine pour chaque proposition ou pour un groupe de propositions la dispersion réelle ($\sigma$) des classements effectués par l'ensemble des personnes constituant l'échantillon, on détermine la dispersion théorique maximale ($\Sigma$) pour un échantillon de même taille et l'on calcule la valeur d'une grandeur (C) par la formule :

$$C = K\left(1 - \frac{\sigma}{\Sigma}\right)$$

où K est un coefficient qui est de préférence égal à 100.

9. Procédé de traitement suivant la revendication 8, caractérisé en ce que l'on détermine la dispersion théorique maximale (écart-type maximal) pour une distribution ayant le même nombre de personnes et la même moyenne que le distribution constatée.

10. Procédé de traitement suivant la revendication 8, caractérisé en ce qu'on détermine la dispersion théorique maximale (écart-type maximal) pour une distribution ayant le même nombre de personnes, mais indépendamment de la moyenne constatée.

**Patentansprüche**

1. Verfahren zur Beschaffung von Informationen bei Personen, die einen repräsentativen Bevölkerungsquerschnitt darstellen, und welches dadurch gekennzeichnet ist, daß nach der Befragung eine Liste mit Fragen bzw. Antwortvorschlägen erstellt wird; jeder Antwortvorschlag wird auf eine verschiedene Karte aufgenommen und jede zu befragende Person erhält den gleichen Satz von einzelnen Karten (3) mit jeweils einem der verschiedenen Antwortvorschläge, zu denen sie ihre Meinung abgeben soll; jedem Umfrageteilnehmer wird eine Vorlage (1) vorgelegt, auf der sich eine bestimmte Anzahl von Feldern mit verschiedenen Angaben befindet; jede Person aus der Erhebungseinheit ordnet dann die verschiedenen Antwortvorschläge nacheinander den entsprechenden Feldern auf der Vorlage zu; anschließend wird jedem Antwortvorschlag eine "Note" bzw. ein "Koeffizient" entsprechend seiner Anordnung auf der Vorlage zugeteilt.

2. Verfahren gemäß Patentanspruch 1, welches dadurch gekennzeichnet ist, daß man einen Satz von Karten N1 (3) mit jeweils einem Vorschlag bzw. einer Information verwendet, sowie eine Vorlage (1) mit einer Anzahl N2 von Feldern, welchen verschiedene Angaben zugeordnet sind.

3. Verfahren gemäß Patentanspruch 2, welches dadurch gekennzeichnet ist, daß die Anzahl N2 der Felder auf der Vorlage größer ist als die Anzahl N1 der Karten mit Antwortvorschlägen.

4. Verfahren gemäß Patentanspruch 2, welches dadurch gekennzeichnet ist, daß die Anzahl N2 mehr als zweimal so groß ist wie die Anzahl N1 der Karten.

5. Verfahren gemäß Patentanspruch 1, welches dadurch gekennzeichnet ist, daß die Felder linear angeordnet sind.

6. Verfahren gemäß Patentanspruch 1, welches dadurch gekennzeichnet ist, daß die Felder in Form eines zweidimensionalen Gitters (2) angeordnet sind.

7. Verfahren gemäß Patentanspruch 6, welches dadurch gekennzeichnet ist, daß der Wert der Felder des Gitters in jeder Reihe in eine Richtung, und in jeder Spalte in eine Richtung zunimmt.

8. Verfahren zur Verarbeitung der gemäß einem beliebigen der oben beschriebenen Patentanspruchsverfahren zusammengetragenen Informationen, welches dadurch gekennzeichnet ist, daß jedem der den Umfrageteilnehmern vorgelegten Antwortvorschlägen ein Koeffizient zugeteilt wird, welcher nach der Position des Feldes bestimmt wird, auf dem sich die Karte mit der entsprechenden Information befindet; es erfolgt eine Klassifizierung der gesamten Antwortvorschläge für jede der befragten Personen; für jeden Antwortvorschlag bzw. jede Vorschlaggruppe wird die reale Streuung () der von der Gesamtheit der Personen aus der Stichprobeneinheit vorgenommenen Einstufungen bestimmt; es wird die maximale theoretische Streuung () für eine Erhebungseinheit gleicher Größe bestimmt und der Wert einer Größe (C) nach folgender Formel errechnet:
$C = K (1 - /)$, wobei der Faktor K vorzugsweise gleich 100 ist.

9. Verarbeitungsverfahren gemäß Patentanspruch 8, welches dadurch gekennzeichnet ist, daß die maximale theoretische Streuung (maximale Standardabweichung) bestimmt wird für eine Verteilung mit der gleichen Personenzahl und dem gleichen Mittelwert wie die festgestellte Verteilung.

10. Verarbeitungsverfahren gemäß Patentanspruch 8, welches dadurch gekennzeichnet ist, daß die maximale theoretische Streuung (maximale Standardabweichung) bestimmt wird für eine Verteilung mit der gleichen Personenzahl, jedoch unabhängig vom festgestellten Mittelwert.

## Claims

1. Method for gathering items of information from persons constituting a representative sample of a population, characterized in that a list of questions or propositions is established following a survey; each proposition is placed on a separate card; each of the persons of the sample is supplied with the same set of cards (3) each bearing one of the propositions on which these persons must give an opinion; each of these persons is placed in front of a support (1) comprising a given number of compartments assigned different values; each of the persons constituting the sample classifies the various propositions in relation to one another by arranging the corresponding cards in the various compartments of the support; and each proposition is assigned a "mark" or a "coefficient" in accordance with its position on the support.

2. Method according to Claim 1, characterized in that a set of N1 cards (3) is used each bearing a proposition or an item of information and a support (1) comprising a number N2 of compartments assigned different values.

3. Method according to Claim 2, characterized in that the number N2 of compartments of the support is greater than the number N1 of cards bearing propositions.

4. Method according to Claim 2, characterized in that the number N2 of compartments is greater than twice the number N1 of cards bearing propositions.

5. Method according to Claim 1, characterized in that the compartments are arranged in a line.

6. Method according to Claim 1, characterized in that the compartments are arranged in accordance with a two-dimensional grid (2).

7. Method according to Claim 2, characterized in that the value of the compartments of the grid increases in each row, in one direction, and increases in each column in one direction.

8. Method for processing items of information gathered by means of the method according to any one of Claims 1 to 7, characterized in that each of the propositions submitted to the persons constituting the sample is assigned a coefficient determined from the position of the compartment on which the card bearing this item of information is located, a classification is effected of all of the propositions for each of the persons of the sample, for each proposition or for a group of propositions the real dispersion ($\sigma$) of the

classifications effected by all of the persons constituting the sample is determined, the maximum theoretical dispersion ($\Sigma$) for a sample of the same size is determined, and the value of a magnitude (C) is calculated by means of the formula:

$$C = K \left(1 - \frac{\sigma}{\Sigma}\right)$$

in which K is a coefficient preferably equal to 100.

9. Processing method according to Claim 8, characterized in that the maximum theoretical dispersion (maximum standard deviation) is determined for a distribution having the same number of persons and the same mean as the observed distribution.

10. Processing method according to Claim 8, characterized in that the maximum theoretical dispersion (maximum standard deviation) is determined for a distribution having the same number of persons but independently of the observed mean.

FIG.1

FIG.2

FIG.3